Europäisches Patentamt

European Patent Office

Office européen des brevets

(19)

(11) Veröffentlichungsnummer: **0 061 472**
**B1**

# (12) EUROPÄISCHE PATENTSCHRIFT

(45) Veröffentlichungstag der Patentschrift:
**18.12.85**

(21) Anmeldenummer: **81902654.3**

(22) Anmeldetag: **29.09.81**

(86) Internationale Anmeldenummer:
**PCT/CH 81/00107**

(87) Internationale Veröffentlichungsnummer:
**WO 82/01120 (15.04.82 Gazette 82/10)**

(51) Int. Cl.⁴: **A 47 J 31/40**

(54) **KAFFEEMASCHINE.**

(30) Priorität: **03.10.80 CH 7378/80**

(43) Veröffentlichungstag der Anmeldung:
**06.10.82 Patentblatt 82/40**

(45) Bekanntmachung des Hinweises auf die Patenterteilung:
**18.12.85 Patentblatt 85/51**

(84) Benannte Vertragsstaaten:
**FR**

(56) Entgegenhaltungen:
**CH - A - 521 115**
**CH - A - 590 041**
**FR - A - 1 364 875**
**FR - A - 2 069 284**
**FR - A - 2 117 193**
**FR - A - 2 156 467**
**FR - A - 2 226 137**
**US - A - 3 369 478**

(73) Patentinhaber: **ROST, Kurt, CH-6210 Sursee (CH)**

(72) Erfinder: **DREMMEL, Engelbert, CH-6207 Nottwil (CH)**

(74) Vertreter: **Cabinet BERT, DE KERAVENANT & HERRBURGER, 115, Boulevard Haussmann, F-75008 Paris (FR)**

ACTORUM AG

# Beschreibung

Gegenstand der vorliegenden Erfindung ist eine Kaffeemaschine. Kaffeemaschinen sind bekannt, bei welchen man Brühwasser in eine Dosierkammer führt, welche mit Kaffeepulver gefüllt ist und letzteres mit gegenläufigen Presskolben presst. Nach der CH-PS 521 115 erfolgt die Zuführung des Brühwassers durch einen oberen Presskolben und die Ableitung des gebildeten Kaffees durch einen scheibenartigen, auf einem in einem Bodenteil der Brühkammer befindlichen auf- und abbeweglichen Bolzen sitzenden Presskolben. Der Bodenteil der Brühkammer ist fest und enthält versteckt und unzugänglich den Aufnahmeraum für das zu brühende Kaffeepulver und den Ablauf des erzeugten Kaffees. Am festen Bodenteil ist dabei auch der Auslauf für den Kaffee angeschlossen. Die schnelle und leichte Reinigung, zwecks Beseitigung des sich unvermeidlich einstellenden Seitengeschmackes ist verunmöglicht, da verschiedene Bestandteile, durch welche der Kaffee läuft, zu lösen sind. Die direkte Sicht auf den Kaffeeablauf nach dem Verlassen der Brühkammer fehlt und ein sekundenschnelles Kontrollieren des Ablaufs ist demzufolge verhindert.

Weitere ähnliche Kaffeemaschinen sind durch die folgenden Patente bekannt: Bei der FR-PS 2 226 137 befinden sich in einem Zylinder zwei gegeneinander bewegliche Presskolben, welche an den einander zugekehrten Seiten Siebe tragen. Der Zylinder ist zwischen zwei Trägerplatten festgelegt. Durch den oberen Presskolben erfolgt die Zuführung von Brühwasser und durch einen in dem unteren Presskolben vorgesehenen Durchgang der Auslauf des durch Zusammendrücken der Presskolben erzeugten Kaffees. Eine rasche Zugänglichkeit zum Brühraum fehlt und die Reinigung ist erschwert. Derartige Kaffeemaschinen sind nur für Grossverbraucher, nicht aber Kleinverbraucher im Haushalt geeignet. Die Ausführung nach der FR-PS 2 117 193 unterscheidet sich von der vorgenannten Vorveröffentlichung durch die geringere Herstellungsmöglichkeit von Portionen in einer Arbeitsphase.

Die Erfindung betrifft eine Kaffeemaschine nach dem Oberbegriff des Patentanspruches 1. Der Erfindung liegt die Aufgabe zugrunde, eine Kaffeemaschine der gattungsgemässen Art zu schaffen, welche für den privaten Gebrauch geeignet ist, weniger Bauteile benötigt und dabei eine kompakte, federlose Bauart ermöglicht, sich durch leichte Zugänglichkeit zum unteren Presskolben und den Teilen, durch welche der erzeugte Kaffee abläuft, sowie leichte und sichere Reinigungsmöglichkeit auszeichnet, so dass sich Filter oder Lochplatten an den Presskolben erübrigen.

Erfindungsgemäss wird diese Aufgabe durch die im Kennzeichen des Patentanspruches 1 genannten Merkmale gelöst. Vorteilhafte Ausbildungen der Kaffeemaschine sind den weiteren abhängigen Patentansprüchen 2 und 3 entnehmbar.

Auf der beiliegenden Zeichnung ist die Kaffeemaschine in einer beispielsweisen Ausführung, welche nur die wesentlichen Bauteile enthalten, dargestellt, und zwar zeigen:

Fig. 1 eine Seitenansicht,
Fig. 2 einen senkrechten Schnitt,
Fig. 3 einen Schnitt nach der Linie III–III Fig. 2,

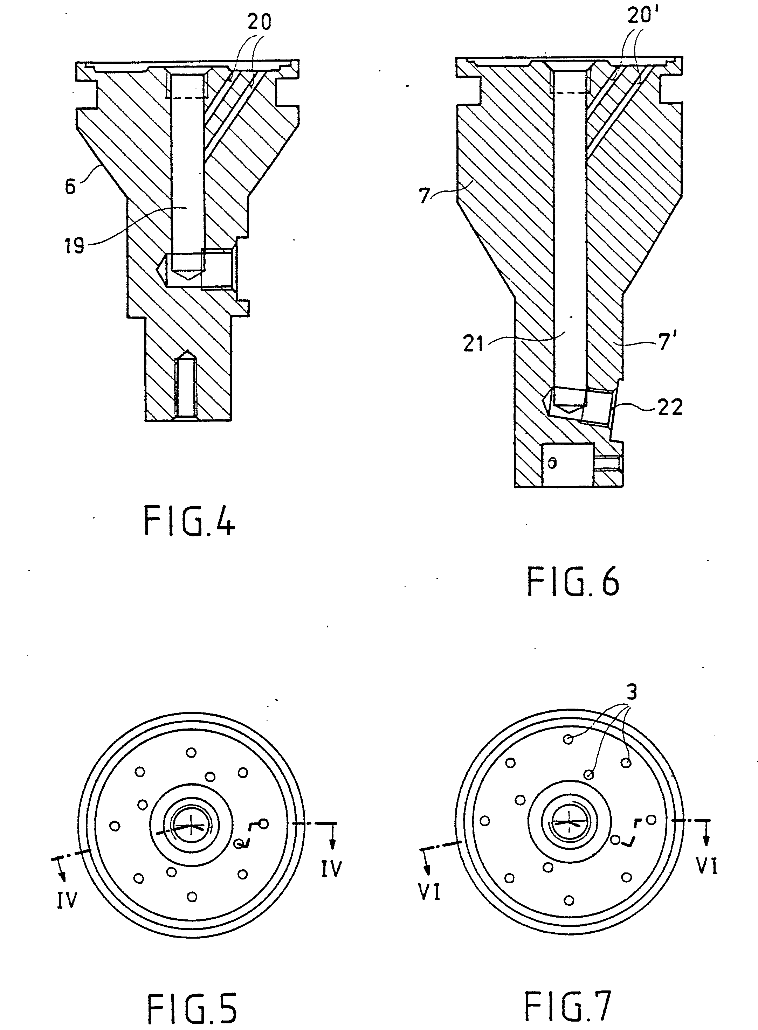

Fig. 4 den oberen Presskolben im senkrechten Schnitt nach der Linie IV–IV in Fig. 5, um 180° verdreht,
Fig. 5 eine Draufsicht zu Fig. 4,
Fig. 6 den unteren Presskolben im senkrechten Schnitt nach der Linie VI–VI in Fig. 7,
Fig. 7 eine Draufsicht zu Fig. 6.

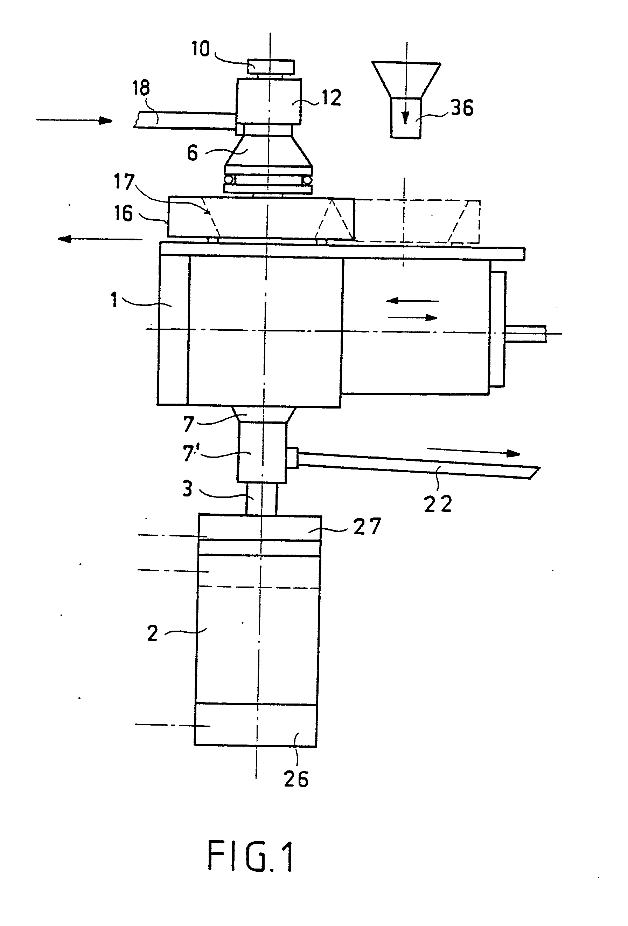

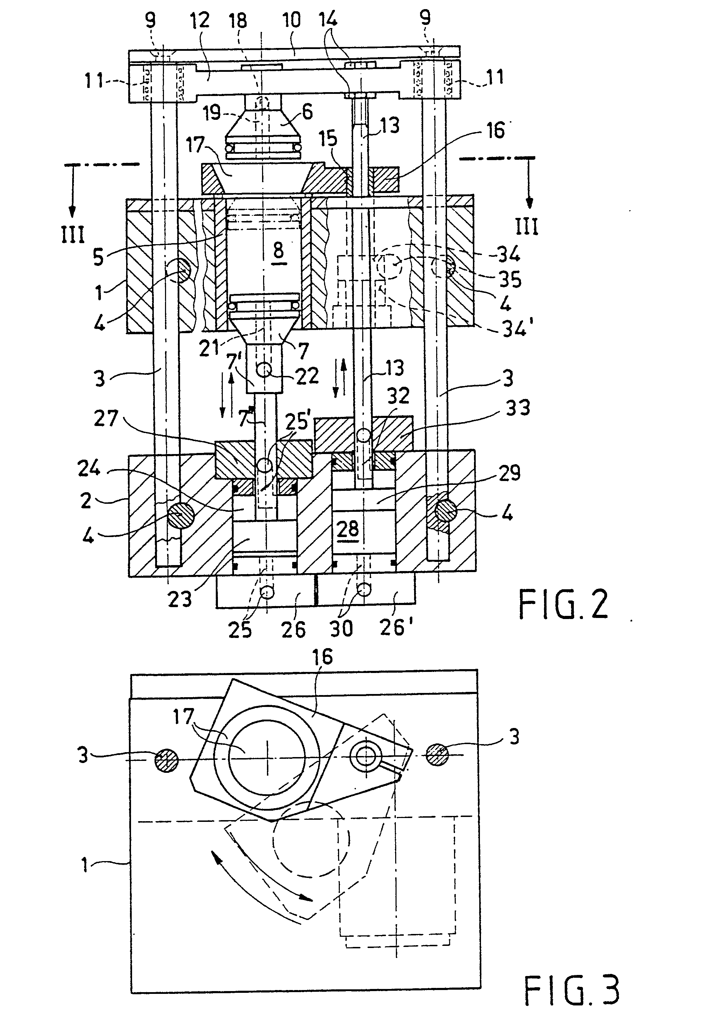

Durch zwei im Abstand zueinander angeordnete, horizontale Trägerplatten 1, 2 und zwei Vertikalstangen 3 wird ein Maschinengestell gebildet. Die Trägerplatten 1, 2 sind auf den Vertikalstangen durch in Rinnen der letzteren eingreifende Bolzen 4 arretiert. In der Trägerplatte 1 sitzt fest ein oben und unten offener Zylinder 5. In den Zylinder 5 ist ein oberer Kolben 6 und ein unterer Kolben 7 einzugreifen bestimmt. In der Zeichnung gemäss Fig. 1 und 2 befindet sich der obere Kolben 6 im Abstand über dem Zylinder 5. Der untere Kolben 7 greift dagegen teilweise in den Zylinder 5 ein und befindet sich in Arbeitsbereitschaft. Wird der Kolben 6 gesenkt, so nimmt derselbe die in Fig. 2 gestrichelte angedeutete Stellung ein und schliesst den Zylinder 5 obenseits ab. Der durch die Kolben 6, 7 und die Innenwand des Zylinders 5 begrenzte Raum bildet eine Brühkammer 8, welche das zu extrahierende Kaffeepulver aufzunehmen bestimmt ist. Die Weiten der Kolben 6, 7 sind dem Innendurchmesser des Zylinders 5 resp. der Brühkammer 8 angepasst. Auf den oberen Enden der Vertikalstangen 3 ist durch Schrauben 9 eine Strebe 10 festmontiert. Auf den Vertikalstangen 3 befindet sich ein mit Kugellager 11 ausgerüsteter, in der Vertikalrichtung verschiebbarer Mitnehmer 12. Am Mitnehmer 12 ist eine Führungsstange 13 durch Schrauben 14 festgelegt, welche die Trägerplatte 1 durchsetzt und teilweise in die Trägerplatte 2 eingreift. Auf der Führungsstange 13 lagert eine Mitnehmerbüchse 15, auf welcher über der Trägerplatte 1 ein Drehglied 16 angeordnet ist. Dieses wird bei Verdrehung der Mitnehmerbüchse 15 mitgenommen und dabei über den Zylinder 5 oder ausserhalb desselben gebracht. Das Drehglied 16 weist eine nach unten sich verjüngende Öffnung 17 auf, wobei die untere Weite derselben gleichgross ist wie der Durchmesser des Brühraumes 8 im Zylinder 5. Am oberen Kolben ist eine Wasserzuführungsleitung 18 angeschlossen, die zum Durchgang 19 führt und in die untere Seite des Kolbens 6 mündet. Vom Durchgang gehen seitliche, zur unteren Seite des Kolbens 6 geführte Verteilerkanäle 20 aus. Der untere Kolben 7 geht in einen Schaft 7' über, der einen zentralen Durchgang 21 aufweist, an welchen sich die Kaffeeauslaufleitung 22 anschliesst. Die Leitung 18, 22 sind beide zweckmässig flexibel und bestehen aus Kunststoff oder Metall.

An einer am Kolben 7 festgelegten Stossstange 7 ist eine Kolbenscheibe 23 montiert, welche sich in einer Druckkammer 24 in der Trägerplatte 2 befindet. 25 ist ein Ölkanal, welcher von der Abschlussscheibe 26 ausgeht und obenseits zur Druckkammer 24 führt. Ein weiterer Ölkanal 25′ führt von der Abschlussscheibe 27 ausgehend obenseits in die Druckkammer 24. Die Ölkanäle 25, 25′ stehen durch Leitungen mit einem nicht besonders gezeichneten, an sich bekannten Öldruckerzeuger in Verbindung. Die Führungsstange 13 greift unten in eine Druckkammer 28, welche sich in der Trägerplatte 2 befindet. An der Führungsstange 13 ist zur Höhenverstellung des Mitnehmers 12 mit dem Kolben 6 eine Kolbenscheibe 29 vorgesehen, welche sich in der Druckkammer 28 auf- und abbewegt. 30 ist ein Ölkanal, welcher von der Abschlussscheibe 26′ ausgeht und zur Druckkammer 28 führt. Ein Ölkanal 32 geht von der Abschlussscheibe 33 zum nicht besonders dargestellten Druckspender. Der Kolben 7 weist ebenfalls von dessen Oberseite zum zentralen Durchgang 21 verlaufende Verteilerkanäle 20′ auf. Über der oberen Trägerplatte 1 ist auf der Lagerbüchse 34′ ein Zahnrad 34 montiert, in welches eine quer zur Führungsstange 13 bewegliche, gezahnte Stossstange 35 eingreift. Die letztere wird durch nicht besonders gezeichnete, konventionelle, wiederum durch Öldruck gesteuerte, teilweise durch einen Kolben gebildete Betätigungsorgane innert gewissen Grenzen hin- und herverstellt. Dabei wird das Drehglied 16, welches das Einfüllen von Kaffeepulver in den Zylinder 5 und später das Wegfördern des durch den Kolben herausgepressten Kaffeepulvers ermöglicht, entsprechend mitgenommen. Das Drehglied 16 kann zum Füllen der Öffnung 17 mit Kaffeepulver unter den Kaffeepulver-Ausgeber 36, wie durch gestrichelte Linie in Fig. 1 gezeigt, oder über den Zylinder 5 gemäss Fig. 2 verlegt werden.

Die Kolben 6, 7 und die Stossstange 35 zum Verstellen des Drehgliedes 16 sind unabhängig hydraulisch betätigt.

Die Kaffeemaschine mit den verschiedene Bewegungen und Funktionen ausführenden Bestandteilen wird durch an sich bekannte elektronische Geräte geregelt.

**Patentansprüche**

1. Kaffeemaschine mit einer, das zu extrahierende Kaffeepulver aufnehmenden Brühkammer (8), zu welcher eine Heisswasserleitung (18) führt und von der eine Kaffee-Auslaufleitung (22) ausgeht, und mit in einem Zylinder (5) der Brühkammer zwei gegeneinander bewegliche, öl-hydraulisch betätigbare Presskolben (6, 7) mit je einem Durchgang in dem oberen Presskolben (6) für das Heisswasser und im unteren Presskolben (7) für den erzeugten Kaffee sowie mit zwei im Abstand übereinander angeordneten Trägerplatten (1, 2) dadurch gekennzeichnet, dass die zwei Trägerplatten (1, 2) an Vertikalstangen (3) festgelegt sind und dass in der oberen Trägerplatte (1) die Brühkammer (8), in der unteren Trägerplatte (2) dagegen die hydraulischen Betätigungselemente (23) eingebettet sind, wobei der untere Presskolben (7) in Bereitschaftsstellung nur teilweise in die Brühkammer eingreift, mit seinem unteren Teil vorsteht und im Raum zwischen den Trägerplatten von aussen zugänglich freiliegt, und dass der Durchgang im unteren Presskolben ein axialer Durchgang (21) ist, an welchen sich mit dem unteren Presskolben mitbewegend eine flexible Kaffee-Auslaufleitung (22) angeschlossen ist.

2. Kaffeemaschine nach Anspruch 1, dadurch gekennzeichnet, dass über den Zylinder (5) in der Brühkammer (8) ein eine verschwenkbare Kaffeepulver-Einfüllöffnung (17) aufweisendes Drehglied (16) angeordnet ist, welches auf einer Stange (13) sitzt, die durch hydraulisch betätigte Bewegungsübertragungsorgane (34, 35) verdrehbar ist.

3. Kaffeemaschine nach den Ansprüchen 1 und 2, dadurch gekennzeichnet, dass der obere Presskolben (6) an einem Mitnehmer (12) festgelegt ist, der auf- und abverschiebbar auf den Vertikalstangen (3) lagert, wobei der Mitnehmer mit der als auf- und abbeweglichen Führung ausgebildeten Stange (13) verbunden ist, welche zur Höhenverstellung mit einer in einer Druckkammer (28) liegenden, durch Bewegungsenergie verstellbaren Kolbenscheibe (29) in Arbeitsverbindung steht.

**Claims**

1. Coffee machine having a brewing chamber (8) to receive the powdered coffee to be infused, to which a hot water conduit (18) leads and from which a coffee outlet conduit (22) leaves, and having two relatively-displaceable oleo-hydraulically actuated press-pistons (6, 7) in a cylinder (5) of the brewing chamber, with a passage in the upper press-piston (6) for returning water and in the lower press-piston (7) for the brewed coffee, and having two spaced-apart carrier plates (1, 2), characterised in that the two carrier plates (1, 2) are fixed to vertical posts (3), in that the brewing chamber (8) is within the upper carrier plate (1) and the hydraulic actuating element (23) is within the lower carrier plate (2), so that the lower press piston (7) in the operative position is only partially within the brewing chamber and has its lower part protruding therefrom into the space between the carrier plates which is accessible to the outside, and in that the passage in the lower press piston is an axial passage (21), to which a flexible coffee outlet conduit (22) on the lower press piston is attached and displacable therewith.

2. Coffee machine according to claim 1, characterised in that, above the cylinder (5) in the brewing chamber (8), there is arranged a rotable member (16) having a pivotable inlet opening (17) for powdered coffee, which member is supported by a post (13) which is rotatable by means of hydraulically-actuated movement-transmitting organs (34, 35).

3. Coffee machine according to claims 1 and 2, characterised in that the upper press piston (6) is fixed to a carrier (12), which is mounted on the vertical posts (3) so as to be displaceable up and down so that the carrier is connected to the post (13) which is formed as an upwardly – and downwardly – displaceable guide, which is operatively connected for height adjustment to a piston plate (29) located in a pressure chamber (28) and adjustable by kinetic energy.

## Revendications

1. Machine à café comportant une chambre d'infusion recevant la poudre de café (8) à traiter, dans laquelle arrive une conduite d'eau chaude (18) et de laquelle part une conduite de sortie de café (22) et deux pistons de compression (6, 7) à commande hydraulique par huile, mobiles l'un par rapport à l'autre dans un cylindre (5) de la chambre d'infusion, le piston supérieur (6) ayant un passage pour l'eau chaude et le piston inférieur (7) ayant un passage pour le café obtenu, ainsi que des plaques de support (1, 2) correspondantes, caractérisée en ce que les deux plaques de support (1, 2) sont fixées à des montants verticaux (3) et en ce que la chambre d'infusion (8) est intégrée à la plaque de support supérieure (1), alors que les éléments de manœuvre hydrauliques (23) sont intégrés à la plaque de support inférieure (2), le piston de compression inférieur (7) ne pénétrant qu'en partie dans la chambre d'infusion lorsqu'il est en position prête à servir, sa partie inférieure étant en saillie, librement accessible de l'extérieur dans l'intervalle entre les plaques de support, et en ce que le passage du piston de compression inférieur est un passage axial (21) auquel est reliée une conduite de sortie souple (22) de café, mobile avec le piston de compression inférieur.

2. Machine à café selon la revendication 1, caractérisée en ce qu'au-dessus du cylindre (5), dans la chambre d'infusion (8) il est prévu un organe tournant (16) comportant une ouverture de remplissage de café en poudre (17), basculante, qui repose sur une tige (13) susceptible d'être tournée par des organes de transmission de mouvement (34, 35) commandés hydrauliquement.

3. Machine à café selon les revendications 1 et 2, caractérisée en ce que le piston de compression supérieur (6) est fixé à un organe d'entraînement (12) qui est coulissant vers le haut et vers le bas sur les montants verticaux (3), l'organe d'entraînement étant relié à la tige (13) en forme de tige de guidage susceptible de se soulever et de s'abaisser, et qui pour le réglage en hauteur coopère avec un disque de piston (29) logé dans une chambre de pression (28) et qui est réglable par l'énergie de déplacement.

FIG.1

FIG.2

FIG.3

FIG.4

FIG.6

FIG.5

FIG.7